# EUROPEAN PATENT SPECIFICATION

(11) **EP 4 164 069 B1**
(45) Date of publication and mention of the grant of the patent: **20.08.2025**
(21) Application number: 22199803.2
(22) Date of filing: 05.10.2022
(51) Int. Cl.: H01R 13/639, H01R 13/58, H01R 13/516

(54) **CABLE PROTECTION COVER FOR INCREASING PULL-OUT RESISTANCE**
KABELSCHUTZABDECKUNG ZUR ERHÖHUNG DER AUSZIEHFESTIGKEIT
COUVERCLE DE PROTECTION DE CÂBLE POUR AUGMENTER LA RÉSISTANCE À L'ARRACHEMENT

(30) Priority: 05.10.2021 IN 202141045246
(43) Date of publication of application: 12.04.2023
(73) Proprietor: TE Connectivity India Private Limited, Bangalore 560048 (IN); TE Connectivity Germany GmbH, 64625 Bensheim (DE)
(72) Inventor: KRAH, Thorsten, 67346 Speyer (DE); KARABIYIK, Hamdi, 67346 Speyer (DE); SINGH, Kiranpal, 560048 Bangalore (IN); LANGJAHR, Udo, 67346 Speyer (DE); KELLER, Jens, 67346 Speyer (DE); EICHINGER, Florian, 67346 Speyer (DE); EL MOUSSATI, Mohammed Hanie, 64625 Bensheim (DE); FARKATSIS, Dimitrios, 64625 Bensheim (DE)
(74) Representative: Grünecker Patent- und Rechtsanwälte PartG mbB

(56) References cited:
- US-A1- 2015 037 988
- US-B2- 7 559 788
- US-B2- 8 602 809

## Description

### BACKGROUND OF THE INVENTION

The invention relates to electrical devices, such as sensors, actuators, displays and electronic control units, and the attachment of electric cables thereto.

There is a trend that electrical devices are becoming increasingly smaller. This miniaturization requires smaller housings and consequently smaller electric connectors for power supply and/or data transmission. A problem associated with this miniaturization is that the pull-out forces of the electric cables and connectors attached to the housings of the electrical devices are often very small and might not comply with the relevant safety regulations. US7559788 B2 discloses a cable protection cover according to the preamble of claim 1.

### SUMMARY OF THE INVENTION

The object of the invention is to provide a solution that increases the pull-out force of electric cables and/or connectors attached to housings of electrical devices.

According to the invention, this is achieved with a cable protection cover configured to be attached to a housing of an electrical device, the cable protection cover comprising a housing attachment section adapted for securing the cable protection cover to the housing, the housing attachment section further being adapted to receive an electric connector attached to the housing and including a connector lock the connector lock having at least one locking member adapted to restrain the electric connector in its position attached to the housing at least in a pull-out direction of the connector, the locking member of the connector lock protrudes inwards perpendicular to the pull-out direction and establishes a positive fit against the pull-out direction between the cable protection cover and the electric connector. Thus, the electric connector is at least indirectly secured to the housing.

The housing attachment section, in particular with its connector lock, mechanically secures the electric connector to the housing along the pull-out direction and thus increases the pull-out force. The solution according to the invention can further be improved by the following further developments and advantageous embodiments, which are independent of each other and can be combined arbitrarily, as desired.

To further increase the pull-out force, the cable protection cover may comprise a strain relief section adapted to receive at least one cable of the electric connector. As will be described further below, the strain relief section may comprise at least one cable strain relief element. If the electric connector itself has integrated means for strain relief, the strain relief section of the cable protection could be used in addition or omitted.

Optionally, the cable protection cover may further comprise a tube attachment section adapted to engage a cable tube surrounding the at least one cable. This allows the provision of added protection for the at least one cable. In particular, the tube attachment section may comprise a tube locking element adapted to engage the cable tube, such as a corrugated tube surrounding the at least one cable. This tube locking element can protrude inwards and/or be shaped as a collar. Preferably, the tube locking element may be formed complementarily to the outside of the corrugated tube. For this, the tube locking element may comprise at least one protrusion adapted to enter between two ribs of the corrugated tube. According to another possible embodiment, the housing attachment section may comprise a positive fit arrangement that protrudes inwards and is adapted to establish a positive fit with the housing in an assembled state at least in the pull-out direction. This way, the cable protection cover may be directly secured to the housing.

In a space-saving configuration, the positive-fit arrangement can be located at an end of the cable protection cover. It can be a sidewall or outer wall of the cable protection cover. It can thus have a double function. The volume thus does not have to increase although an additional function is added.

At least one of the positive fit arrangement and connector lock can be part of a collar or formed as a collar. Such a solution can save space and weight. The collar can protrude inwards from a sidewall. A collar can be an element that protrudes perpendicular to the pull-out direction. The collar can extend around the cable at least 40 % of the circumference of the cable.

The positive fit arrangement and the connector lock can be flat parts. They can extend basically perpendicular to the pull-out direction. A dimension in the pull-out direction can be less than the dimensions perpendicular to the pull-out direction, in particular by a factor of at least three, preferably at least five.

At least one of the positive fit arrangement and the connector lock can be part of a wall or formed as a wall. Such an embodiment can save space and weight while providing sufficient stability.

In an advantageous embodiment, the positive fit arrangement and the at least one locking member of the connector lock protrude from a common sidewall of the cable protection cover. This can increase the stability of the cable protection cover. A particularly stable configuration can be achieved when at least one of the positive fit arrangement and the at least one locking member of the connector lock protrude perpendicularly from the common sidewall of the cable protection cover.

At least one of the positive fit arrangement and the connector lock, preferably both, can advantageously be integral with the common sidewall of the cable protection cover to further increase stability.

In an advantageous embodiment of the cable protection cover, the strain relief section is located between the tube attachment section and the housing attachment section, the strain relief section comprising a cavity and at least one deflection wall protruding into the cavity perpendicular to the pull-out direction. Such a strain relief section can further increase the pull-out force by taking up forces exerted onto the at least one cable. In order to be able to mechanically interact with the at least one cable, the strain relief section may separate the tube attachment section, if present, from the housing attachment section. In particular, the strain relief section may comprise a deflection zone, in which the cavity is U-, V- or W-shaped.

The cavity can comprise an inlet and an outlet for the at least one cable and the deflection wall can intersect a direct connection volume between the inlet and the outlet. This way, the cable is automatically bent and contacts the deflection wall. A pull-out force is thus increased due to friction and diversion of the force into the deflection wall.

To increase this effect, any direct connection line between the inlet and the outlet can intersect the deflection wall. For this, the at least one deflection wall may extend past the center of the cavity.

In particular, the deflection wall can block at least 60 % of the cross-section of the cavity. This can increase the bending and the diversion effect. The cross-section can in particular be taken perpendicular to the pull-out direction. Advantageously, the deflection wall blocks at least 70 %, preferably at least 80 % of the cross-section.

The deflection wall can be connected to the sidewalls at at least 50 % of the inner circumference of the cavity. This can increase the mechanical stability of the cable protection cover. Preferably, this value is at least 60 %, especially at least 70 %.

Advantageously, the deflection wall is a continuous wall with no holes in it. The deflection wall can have an edge at the end that runs straight from one side to the other. This can avoid damage to the cable. For easy manufacturing, the deflection wall can be integral with at least one sidewall of the cavity.

According to an advantageous embodiment, the strain relief section comprises at least two deflection walls protruding into the cavity from opposing sides, wherein the two deflection walls overlap in the pull-out direction. The overlap increases the pull-out force in particular because the necessary bending of the cable is increased. An overlap can be defined such that when looking along the pull-out direction, one deflection wall is located behind the other.

In order to save space, the second deflection wall can define the outlet or the inlet. Such a deflection wall then has a double function.

Further, the housing attachment section and the tube attachment section, if present, may form the cavity jointly with the strain relief section as a continuous cavity to achieve a compact structure. The continuous cavity may extend through the cable protection cover, in particular, along the pull-out direction.

For easy production and assembly, the cable protection cover can comprise two parts that are connected by at least one film hinge. Two fitting parts are then connected by the film hinge and it is not necessary to have two different feed lines for the two parts or to look for two fitting parts during an assembly step.

In an alternative embodiment, the cable protection cover comprises two separate parts. Such an embodiment can be easier to manufacture.

The cable protection cover can comprise two part shells that, together, form the cable protection cover. The two part shells may be adapted to be closed around the at least one cable and the cable tube, if present. This can facilitate the manufacturing process.

In particular, at least one deflection wall can be located on each part. In such an embodiment, the cable can be placed on one of the parts. When the two parts are then mounted to each other, the deflection walls will automatically deflect the cable.

Advantageously, a mounting direction along which the two parts are mounted to each other is perpendicular to the pull-out direction. This allows a simple assembly process.

The assembly process can be further simplified when a separation plane between the two parts is parallel to the pull-out direction.

In an advantageous embodiment, the cable protection cover comprises an inspection hole through which the presence of the tube is detectable from outside in the assembled state. The inspection through hole may be directed into an interior of the tube attachment section. In particular, the inspection through hole may extend substantially perpendicular to the direction of the continues cavity. A correct implementation of the assembly process can thereby be verified in a simple way.

The invention further relates to an assembly comprising at least one of the housing, the connector, or the tube in addition to the cable protection cover. The assembly may in particular comprise the cable protection cover according to any one of the above embodiments. The connector can be plugged into the housing along a plugging direction that is substantially parallel to the pull-out direction. To achieve this, the housing may comprise a connector interface adapted to be connected to the electric connector. In the assembled state, the connector interface and the electric connector are at least partly covered by the cable protection cover, wherein the electric connector in the connector interface is blocked in the pull-out direction by the cable protection cover. Further, in the assembled state, the at least one cable extends through the strain relief section, if present.

In particular, the assembly can comprise the housing, the connector and the cable protection cover.

In order to achieve a good mechanical supporting effect, the distance between opposing inner surfaces of the positive fit arrangement and the connector lock can be equal to the distance between corresponding outer surfaces on the housing and the connector in the assembled state. The distance can in particular be measured along the pull-out direction. If a slight pressing effect for pressing the connector into the housing is designed, the distance between the opposing inner surfaces of the positive fit arrangement and the connector lock should be slightly shorter than the distance between corresponding outer surfaces on the housing and the connector in the assembled state.

According to an advantageous embodiment, the inner surfaces of the positive fit arrangement and/or the connector lock and/or outer surfaces on the housing and the connector in the assembled state are perpendicular to the pull-out direction. Such an embodiment can be easy to manufacture, for example when the cable protection cover is produced by injection molding.

In a further advantageous embodiment at least one of the inner surfaces of the positive fit arrangement or the connector lock or outer surfaces on the housing or the connector is slightly tilted towards the pull-out direction in order to achieve an automatic pressing of the connector into the housing during a mounting step.

In a further advantageous embodiment, the cable protection cover can be a connector position assurance for the connector in the housing. The cable protection cover can then only be attached when the electric connector is plugged into the housing correctly, in particular along the entire designated travel of the plugging movement. To achieve this, the electric connector may, for example, block a fixation of the cable protection cover to the housing if the electric connector is not fully mounted to the connector interface. Moreover, a closing of the two parts of the cable protection cover around at least one of the cable and the electric connector may be blocked by the electric connector not fully mounted to the connector interface. This prevents errors during the installation of the electric connector.

In particular, the housing attachment section may comprise at least one blocking protrusion abutting the electric connector, wherein the electric connector is arranged between the housing and the at least one blocking protrusion. Preferably, the electric connector is arranged between the housing and the at least one blocking protrusion, when it is in the assembled state. Otherwise, the at least one blocking protrusion abuts the electric connector. Thus, the function of the connector position assurance may be achieved through the blocking protrusion, which advantageously also serves to secure the electric connector to the housing.

The assembly can further comprise the tube.

The tube can be a cable protection tube. The tube can be flexible, in particular due to the corrugated structure.

The connector can comprise terminals for cables or wires. The terminals can be inserted or insertable into the connector housing along the pull-out direction. The connector can comprise cavities for the terminals and/or terminal latching elements for securing the terminals in the connector.

The terminals can be attached to the cables by a crimping connection.

To create the positive fit, the tube attachment section can comprise at least one further positive fit element. Like the other positive fit elements, this positive fit element can protrude inwards and/or be shaped as a collar.

The cable protection cover can comprise a receptacle for the electric connector on the cable.

The invention will now be described in greater detail and in an exemplary manner using advantageous embodiments and with reference to the drawings. The described embodiments are only possible configurations in which, however, the individual features as described above can be provided independently of one another or can be omitted.

### BRIEF DESCRIPTION OF THE DRAWINGS

The invention will now be described by way of example with reference to the accompanying drawings in which:
- Fig. 1: shows a schematic perspective view of an assembly with a first embodiment of a cable protection cover;
- Fig. 2: shows a schematic exploded view of parts of the assembly of fig. 1;
- Fig. 3: shows a schematic view of the parts of fig. 2 during a mounting step;
- Fig. 4: shows a schematic sectional view through parts of the assembly of fig. 1 in an assembled state;
- Fig. 5: shows a schematic sectional view through the parts of the assembly of fig. 1 in an assembled state from a different angle;
- Fig. 6: shows a schematic sectional view through an assembly with a second embodiment of a cable protection cover;
- Fig. 7: shows the schematic perspective view of the assembly of fig. 6; and
- Fig. 8: shows a schematic perspective view of a third embodiment of a cable protection cover.

### DETAILED DESCRIPTION OF THE INVENTION

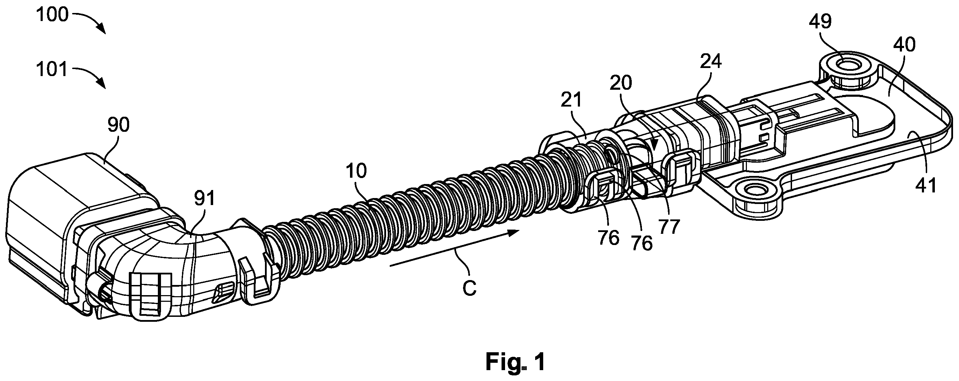

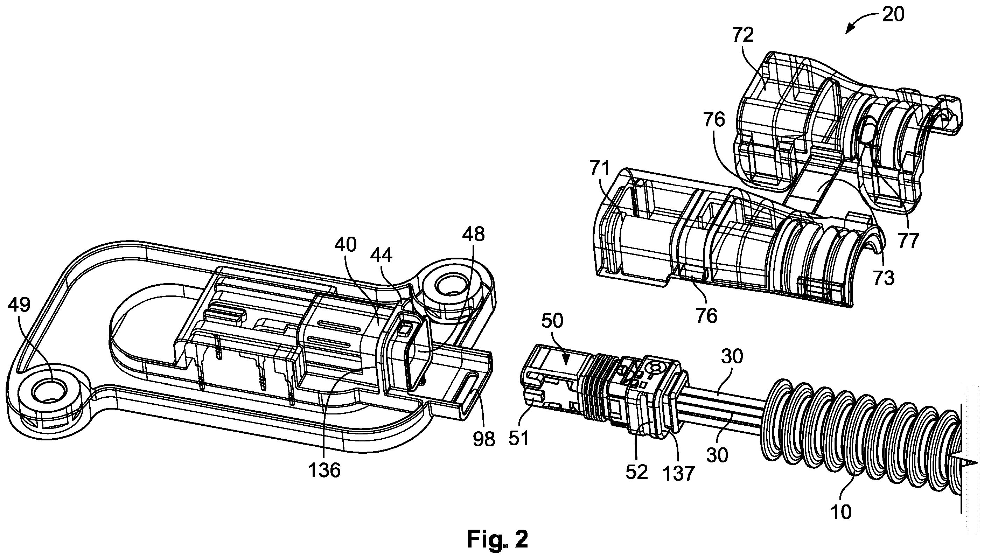

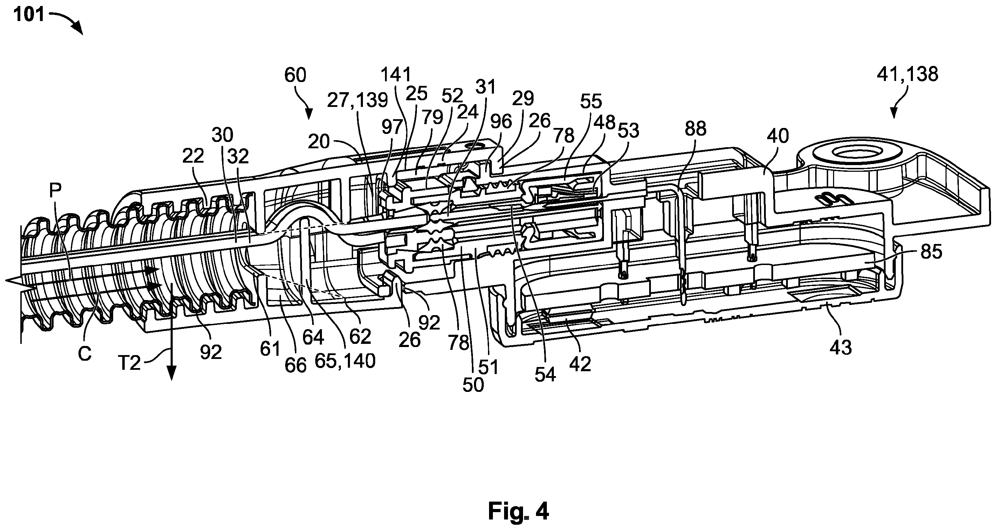

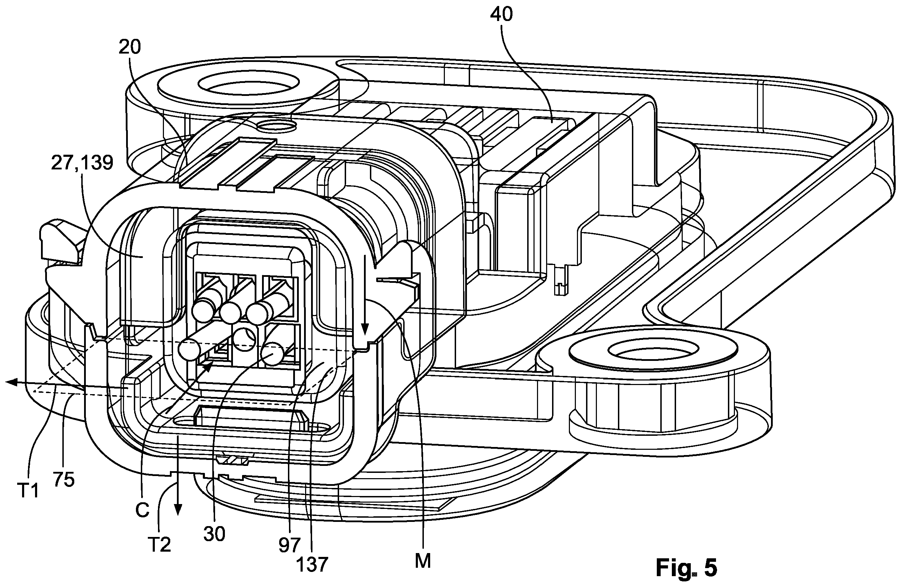

The drawings show exemplary embodiments of the inventive cable protection cover and assembly, wherein like reference numerals refer to like elements. The invention may, however, be embodied in many different forms and should not be construed as being limited to the embodiments shown in the drawings and described below. These embodiments are rather provided so that the present disclosure is thorough and fully conveys the concept of the invention to those skilled in the art. Figs. 1 to 5 show a first embodiment of a cable protection cover 20 as part of an assembly 100. In figs. 1, 4 and 5, the assembly 100 is shown in an assembled state 101. Such an assembly 100 can, for example, be used in automobiles for measuring the rotational speed of an axle.

The assembly 100 comprises a sensor 41 with a housing 40. Instead of or in addition to the sensor 41, any other electrical device 138 with a housing 40 could be used as in the assembly 100 as well. Into a connector interface 48 of the housing 40, an electric connector 50 can be plugged along a plugging direction P. The connector interface 48 can be formed at least complementary to the connector 50. Further, the connector interface 48 can comprise openings for the terminals 53.

Cables 30 are fixed to the connector 50 through terminals 53 that are crimped onto the cables 30 and secured in corresponding cavities 54 by terminal latching elements 55 that are formed as deflectable arm-like elements. This connection between the cables 30, the terminals 53, the connector 50 and the housing 40 can take up part of the pull-out forces that act when forces are applied to the cables 30 counter to a pull-out direction C, along which the cables 30 extend. However, as for smaller connectors this connection might not provide a high enough pull-out force to comply with the relevant regulations, the cable protection cover 20 can take up further forces, as will be described below.

The cable protection cover 20 may comprise a tube attachment section 21 that serves for attaching a tube, such as a corrugated tube 10. The tube attachment section 21 may also be adapted to be used in combination with other tube types. Purely by way of example, the tube attachment section 21 of the shown exemplary embodiment is used in combination with a corrugated tube 10 and therefore has tube locking element 22 engaging the corrugations of the tube 10 that act as positive fit elements 92. The corrugated tube 10 is adapted for receiving the cables 30. Due to the corrugations, the tube 10 has a certain flexibility that allows a bending, while providing a stable inner volume for the cables 30. The corrugated tube 10 thus acts as a cable protection tube. Each cable 30 can comprise a core 31 made from an electrically conducting material like copper and an insulator 32 around the core 31.

At the other end of the cable protection cover 20, a housing attachment section 24 is present. The housing attachment section 24 in particular comprises a positive fit arrangement 26 that protrudes inwards from a sidewall 25 and secures the cable protection cover 20 along the pull-out direction C by engaging a corresponding positive fit element 96 on the housing 40. The positive fit arrangement 26 on the cable protection cover 20 and the positive fit element 96 on the housing 40 are shaped as collars 44 that protrude perpendicular to the pull-out direction C from the rest of the cable protection cover 20 or the housing 40, respectively. The positive fit arrangement 26 has a double function, as it is located at an end and forms an end wall 29 of the cable protection cover 20. The electric connector 50 is partially located in a receptacle 79 of the cable protection cover 20.

The cable protection cover 20 further comprises a connector lock 27 with at least one locking member 139 that secures the connector 50 against being pulled out from the housing 40 counter to the pull-out direction C. Similar to the positive fit arrangement 26, the at least one locking member 139 of the connector lock 27 is also shaped as a collar 44 and protrudes inwards. It engages a corresponding positive fit element 97 on the connector 50.

The connector lock 27 protrudes from the same sidewall 25 as the positive fit arrangement 26. The positive fit arrangement 26 and the connector lock 27 are both integral with the side wall 25. The cable protection cover 20 can for example be made from a plastic material and be formed by injection molding to achieve such a configuration. The positive fit arrangement 26 and the connector lock 27 are both flat parts that protrude as walls or wall-like sections from the sidewall 25.

Each of the cable protection covers shown in the figures comprises another positive fit element 28 that creates a direct positive fit between the cable protection cover 20 and the housing 40 in and against the pull-out direction C by engaging a corresponding positive fit element 98 in the form of a through-hole in the housing 40. This indirectly strengthens the connection between the housing 40 and the connector 50.

The cable protection cover 20 acts as a cable protection cover that protects the cables 30 from external influences.

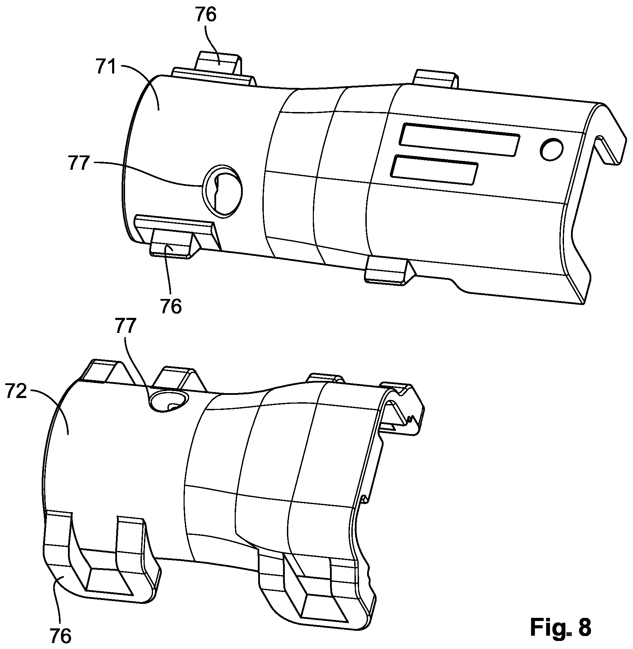

The two embodiments of the cable protection cover 20 shown in figs. 1 to 7 each comprise two parts 71, 72 that are connected to each other by a film hinge 73. This can facilitate the assembling process as two fitting parts are already connected and the step of looking for two fitting parts can be skipped. However, as shown in the embodiment in fig. 8, the cable protection cover 20 can also comprise two separate part 71, 72. This has the advantage that different versions of cable protection covers 20 can be produced for example by mating one version of the first part 71 with different versions of the second part 72. In any case, the two parts 71, 72 are two part shells that in combination with each other and the housing 40 form a closed shell. In other embodiments, the cable protection cover 20 could be only a single part.

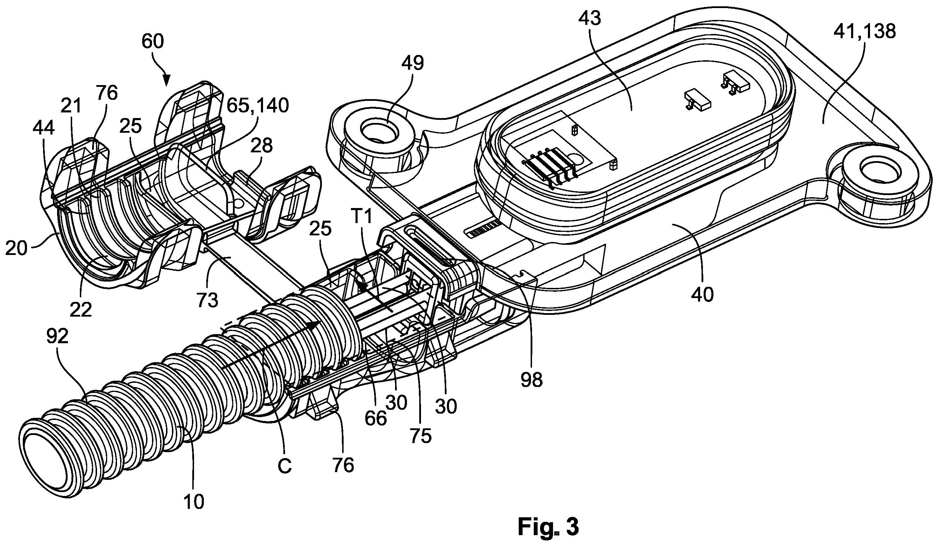

As can for example be seen in fig. 3, a separation plane 75 between the first part 71 and the second part 73 runs parallel to the pull-out direction C in the assembled state 101. The mounting of the cable protection cover 20 can be performed sideways and is thus simple. The separation plane 75 is further defined by a first transverse direction T1 that is perpendicular to the pull-out direction C. The first part 71 is attached to the second part 72 by latching elements 76.

The assembly 100 shown in fig. 1 comprises a further connector 90 and a further cable protection cover 91 located at the other end of the tube 20. At this side, the assembly 100 can be attached to devices that receive the signals measured by the sensor 41. The further connector 90 can for example be connected to an engine control unit (ECU) and/or to another type of electrical device.

The connector 50 shown in the embodiment of figs. 1 to 5 comprises a first part 51 and a second part 52 that is engaged with the first part 51. In other embodiments, however, the connector 50 could comprise a single part only. Further, sealing elements 78 inhibit the ingress of dirt or fluids.

For further increasing the pull-out force, the embodiment shown in figs. 1 to 5 comprises a strain relief section 60 with at least one cable strain relief element 140. Said cable strain relief element 140 may be a deflection wall 65 protruding into a cavity 66 perpendicular to the pull-out direction C. The deflection wall 65 serves for bending the cables 30 perpendicular to the cable direction C and for thereby converting the pull-out force into deformation energy for deforming the cables 30. The deflection wall 65 bends the cables 30 along a second transverse direction T2 that is perpendicular to the pull-out direction C and perpendicular to the first transverse direction T1.

The cables 30 can enter the cavity 66 at an inlet 61 and exit the cavity 66 at an outlet 62. The deflection wall 65 intersects a direct connection volume 64 between the inlet 61 and the outlet 62. In the depicted embodiment, the deflection wall 65 blocks the direct connection volume 64 entirely. Any abstract direct connection line between the inlet 61 and the outlet 62 extends through the deflection wall 65.

The deflection wall 65 is located entirely on one of the two parts of the cable protection cover 20, namely on the first part 71. It is integral with the rest of the first part 71 and extends from a sidewall 25. The deflection of the cables 20 can be achieved automatically when the first part 71 is mounted onto the second part 72 in which the cables 30 are already located. The mounting direction M along which the first part 71 is mounted to the second part 72 can be parallel to the second transverse direction T2.

To increase the mechanical stability of the cable protection cover 20, the deflection wall 65 is connected to the sidewalls 25 at at least 50 % of the inner circumference of the cavity 66. Preferably, this value is at least 60 %, especially at least 70 %.

The deflection wall 65 blocks at least 60 percent of the cross section of the cavity, wherein the cross section is taken perpendicular to the pull-out direction C. The deflection wall 65 terminates in a straight edge. The remaining opening between the deflection wall 65 and the opposing sidewall is about 2 to 4 times the thickness of one of the cables 30.

The wall defining the inlet 61 or the wall defining the outlet 62 can be seen as further deflection walls 65 that deflect the cables 30. Each of them can protrude perpendicular to the pull-out direction C from a sidewall 25. Two or more deflection walls 65 can be arranged such that they overlap along the pull-out direction C, that means that parts of them are behind each other when viewed along the pull-out direction C. This helps to increase the amount of bending in the cables 30 and thus to improve the pull-out force. Advantageously, when two deflection walls 65 are present, they protrude from different sides into the interior of the cable protection cover 20.

Each of the cable protection covers 20 comprises at least one inspection hole 77 through which the presence of the tube 10 is detectable from outside in the assembled state 101. Such a detection can for example be performed by a human or by a machine.

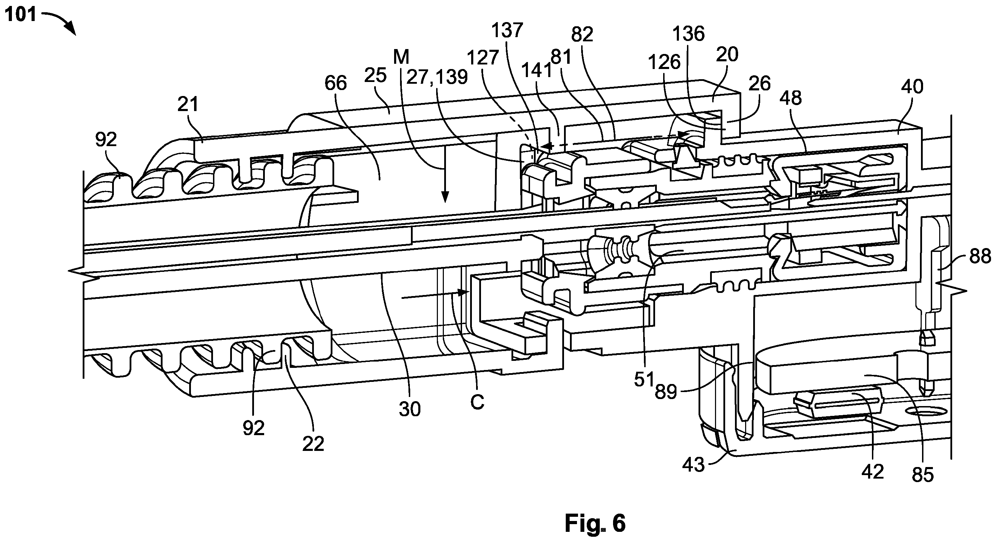

An advantageous development of the dimensions that is however also valid for the first embodiment of figs. 1 to 5, can for example be seen in fig. 6 relating to the second embodiment. The distance 81 between opposing inner surfaces 126, 127 of the positive fit arrangement 26 and the connector lock 27 is equal to the distance 82 between corresponding outer surfaces 136, 137 on the housing 40 and the connector 50 in the assembled state 101. This allows a tight fit with no play. As a result, the pull-out forces can be increase efficiently. These distances 81, 82 are measured along the pull-out direction C.

The inner surfaces 126, 127 of the positive fit arrangement 26 and the connector lock 27 as well as the outer surfaces 136, 137 on the housing 40 and the connector 50 extend perpendicular to the pull-out direction C in the assembled state 101.

The cable protection cover 20 also acts as a connector position assurance for the connector 50 in the housing 40. The cable protection cover 20 can only be attached when the connector 50 is plugged correctly into the housing 40, in particular when it has travelled the complete desired distance. For this purpose, the housing attachment section 24 may comprise at least one blocking protrusion 141 abutting the electric connector 50. In particular, the connector lock 27 may serve as the at least one blocking protrusion 141. Additionally or alternatively, the positive fit arrangement 26 may fulfil this function. If the connector 50 is only plugged partially into the housing 40, the positive fit arrangement 26 and/or the connector lock 27 thus block a mounting of the cable protection cover 20 over the cables 30 by abutting surfaces along the second transverse direction T2.

In addition to the housing 40, the sensor 41 comprises a sensor element 42 for taking up the physical properties to be measured, a printed circuit board (PCB) 85 on which the sensor element 42 and further electrical elements, for example for signal processing, can be located, contact elements 88 that can connect the terminals 53 with the PCB 85, and a cover 42 that is permeable for the physical property to be measured. The cover 42 closes a receptacle 89 in which the PCB 85 is located. Mounting holes 49 serve for mounting the sensor 41 to external elements.

The assembly 100 is shown as comprising the sensor 41, the connector 50, the tube 10 and the cable protection cover 20. In other embodiments, the assembly 100 can comprise more or fewer elements, but at least one in addition to the cable protection cover 20.

The plugging direction P, along which the connector 50 is plugged into the housing 40, is parallel to the pull-out direction C. The terminals 53 can be inserted into the connector 50 along the pull-out direction C to make the assembly process easy.

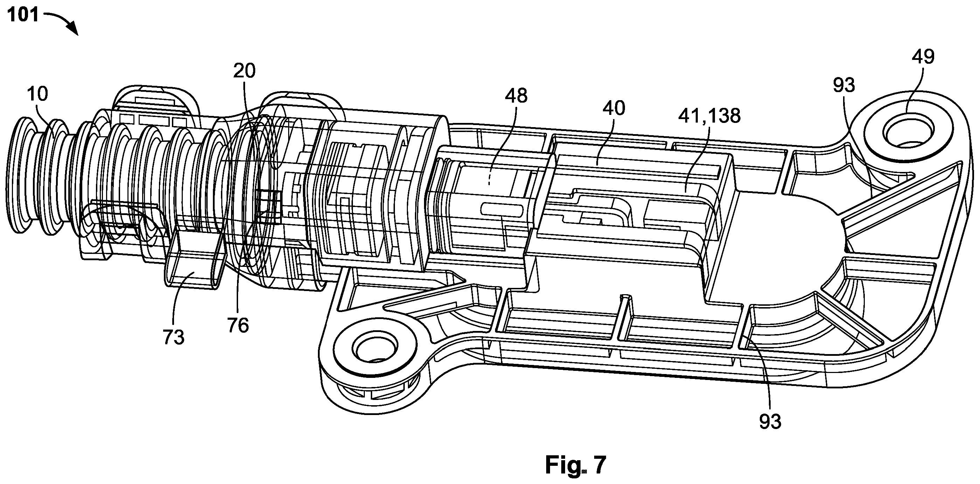

The embodiment shown in figs. 6 and 7 does not comprise a deflection wall 65 for bending the cables 30. Rather, only an empty cavity 66 is formed between the tube attachment section 21 and the housing attachment section 24.

Further, the housing 40 shown in figs. 6 and 7 comprises support bars 93 to increase the stability.

### REFERENCE SIGNS

- 10: tube
- 20: cable protection cover
- 21: tube attachment section
- 22: tube locking element
- 24: housing attachment section
- 25: sidewall
- 26: positive fit arrangement
- 27: connector lock
- 28: positive fit element
- 29: end wall
- 30: cable
- 31: core
- 32: insulator
- 40: housing
- 41: sensor
- 42: sensor element
- 43: cover
- 44: collar
- 48: connector interface
- 49: mounting hole
- 50: connector
- 51: first connector part
- 52: second connector part
- 53: terminal
- 54: cavity
- 55: terminal latching element
- 60: strain relief section
- 61: inlet
- 62: outlet
- 64: direct connection volume
- 65: deflection wall
- 66: cavity
- 71: first part
- 72: second part
- 73: film hinge
- 75: separation plane
- 76: latching element
- 77: inspection hole
- 78: sealing element
- 79: receptacle
- 81: distance inner surfaces
- 82: distance outer surfaces
- 85: PCB
- 88: contact elements
- 89: receptacle
- 90: further connector
- 91: further cable protection cover
- 92: positive fit element
- 93: support bar
- 96: positive fit element
- 97: positive fit element
- 98: positive fit element
- 100: assembly
- 101: assembled state
- 126: inner surface
- 127: inner surface
- 136: outer surface
- 137: outer surface
- 138: electrical device
- 139: locking member
- 140: cable strain relief element
- 141: blocking protrusion

- C: pull-out direction
- M: mounting direction
- P: plugging direction
- T1: transverse direction
- T2: transverse direction

## Claims

1. Cable protection cover (20) configured to be attached to a housing (40) of an electrical device (138),
the cable protection cover (20) comprising a housing attachment section (24) adapted for securing the cable protection cover (20) to the housing (40),
the housing attachment section (24) further being adapted to receive an electric connector (50) attached to the housing (40) and including a connector lock (27), the connector lock (27) having at least one locking member (139) adapted to restrain the electric connector (50) in its position attached to the housing (40) at least in a pull-out direction (C) of the electric connector (50),
**the cable protection cover (20) characterized in that**
the at least one locking member (139) of the connector lock (27) protrudes inwards perpendicular to the pull-out direction (C) thereby further establishing a positive fit against the pull-out direction (C) between the cable protection cover (20) and the electrical connector.

2. Cable protection cover (20) according to claim 1, further comprising a strain relief section (60) adapted to receive at least one cable (30) of the electric connector (50), the cable receiving section comprising at least one cable strain relief element (140).

3. Cable protection cover (20) according to claim 1 or 2, wherein the cable protection cover (20) further comprises a tube attachment section (21) adapted to engage a cable tube (10) surrounding the at least one cable (30).

4. Cable protection cover (20) according to claim 3, wherein the tube attachment section (21) comprises a tube locking element (22) adapted to engage a corrugated tube (10) surrounding the at least one cable (30).

5. Cable protection cover (20) according to claim 3 or 4, wherein the cable protection cover (20) comprises an inspection through hole (77) directed to an interior of the tube attachment section (21).

6. Cable protection cover (20) according to any one of claims 1 to 5, wherein the housing attachment section (24) comprises a positive fit arrangement (26) that protrudes inwards and is adapted to establish a positive fit with the housing (40) in an assembled state (101) at least in the pull-out direction (C).

7. Cable protection cover (20) according to claim 6, wherein the positive fit arrangement (26) and the at least one locking member (139) of the connector lock (27) protrude from a common sidewall (25) of the cable protection cover (20).

8. Cable protection cover (20) according to any one of claims 1 to 7, wherein the cable protection cover (20) comprises two parts (71, 72) that are adapted to be assembled in a direction perpendicular to the pull-out direction (C).

9. Cable protection cover (20) according to claim 8, wherein a separation plane (75) between the two parts (71, 72) is parallel to the pull-out direction (C).

10. Cable protection cover (20) according to claim 8 or 9, wherein the two parts (71, 72) are one of connected by a film hinge (73) and separate.

11. Assembly (100), comprising a housing (40) of an electrical device (138), and the cable protection cover (20) according to any one of claims 1 to 10,
wherein the housing (40) comprises a connector interface (48) adapted to be connected to the electric connector (50), and
wherein, in an assembled state (101), the connector interface (48) and the electric connector (50) are at least partly covered by the cable protection cover (20), the electric connector (50) in the connector interface (48) being blocked in the pull-out direction (C) by the cable protection cover (20).

12. Assembly (100) according to claim 11, wherein the electric connector (50) blocks a fixation of the cable protection cover (20) to the housing (40) if the electric connector (50) is not fully mounted to the connector interface (48).

13. Assembly (100) according to claim 11 or 12, wherein a closing of two parts (71, 72) of the cable protection cover (20) around at least one of a cable (30) and the electric connector (50) is blocked by the electric connector (50) not fully mounted to the connector interface (48).

14. Assembly (100) according to any one of claims 11 to 13, wherein the housing attachment section (24) comprises at least one blocking protrusion (141) abutting the electric connector (50), the electric connector (50) being arranged between the housing (40) and the at least one blocking protrusion (141).

15. Assembly (100) according to any one of claims 11 to 14, wherein the cable protection cover (20) is configured as a connector position assurance for the electric connector (50) in the housing (40).

## Patentansprüche

1. Kabelschutzabdeckung (20), die so konfiguriert ist, dass sie an einem Gehäuse (40) eines elektrischen Geräts (138) befestigt werden kann,
die Kabelschutzabdeckung (20) einen Gehäusebefestigungsabschnitt (24) umfassend, der zum Befestigen der Kabelschutzabdeckung (20) an dem Gehäuse (40) geeignet ist,
der Gehäusebefestigungsabschnitt (24) des Weiteren angepasst ist, um einen elektrischen Verbinder (50) aufzunehmen, der an dem Gehäuse (40) befestigt ist, und eine Verbinderverriegelung (27) umfasst, wobei die Verbinderverriegelung (27) mindestens ein Verriegelungselement (139) aufweist, das angepasst ist, um den elektrischen Verbinder (50) in seiner an dem Gehäuse (40) befestigten Position zumindest in einer Auszugsrichtung (C) des elektrischen Verbinders (50) zurückzuhalten,
die Kabelschutzabdeckung (20) **dadurch gekennzeichnet, dass**
das mindestens eine Verriegelungselement (139) der Verbinderverriegelung (27) senkrecht zur Auszugsrichtung (C) nach innen ragt, wodurch des Weiteren ein Formschluss gegen die Auszugsrichtung (C) zwischen der Kabelschutzabdeckung (20) und dem elektrischen Verbinder hergestellt wird.

2. Kabelschutzabdeckung (20) nach Anspruch 1, des Weiteren umfassend einen Zugentlastungsabschnitt (60), der geeignet ist, mindestens ein Kabel (30) des elektrischen Verbinders (50) aufzunehmen, wobei der Kabelaufnahmeabschnitt mindestens ein Kabelzugentlastungselement (140) umfasst.

3. Kabelschutzabdeckung (20) nach Anspruch 1 oder 2, wobei die Kabelschutzabdeckung (20) des Weiteren einen Schlauchbefestigungsabschnitt (21) umfasst, der geeignet ist, mit einem Wellschlauch (10) in Eingriff zu kommen, der das mindestens eine Kabel (30) umgibt.

4. Kabelschutzabdeckung (20) nach Anspruch 3, wobei der Schlauchbefestigungsabschnitt (21) ein Schlauchverriegelungselement (22) umfasst, das geeignet ist, mit einem Wellschlauch (10) in Eingriff zu kommen, der das mindestens eine Kabel (30) umgibt.

5. Kabelschutzabdeckung (20) nach Anspruch 3 oder 4, wobei die Kabelschutzabdeckung (20) eine Inspektionsöffnung (77) umfasst, die auf das Innere des Schlauchbefestigungsabschnitts (21) gerichtet ist.

6. Kabelschutzabdeckung (20) nach einem der Ansprüche 1 bis 5, wobei der Gehäusebefestigungsabschnitt (24) eine nach innen ragende Formschlussanordnung (26) umfasst, die geeignet ist, mit dem Gehäuse (40) in einem montierten Zustand (101) zumindest in Auszugsrichtung (C) einen Formschluss herzustellen.

7. Kabelschutzabdeckung (20) nach Anspruch 6, wobei die Formschlussanordnung (26) und das mindestens eine Verriegelungselement (139) des Verbinderschlosses (27) aus einer gemeinsamen Seitenwand (25) der Kabelschutzabdeckung (20) herausragen.

8. Kabelschutzabdeckung (20) nach einem der Ansprüche 1 bis 7, wobei die Kabelschutzabdeckung (20) zwei Teile (71, 72) umfasst, die in einer Richtung senkrecht zur Auszugsrichtung (C) zusammengesetzt werden können.

9. Kabelschutzabdeckung (20) nach Anspruch 8, wobei eine Trennebene (75) zwischen den beiden Teilen (71, 72) parallel zur Ausziehrichtung (C) verläuft.

10. Kabelschutzabdeckung (20) nach Anspruch 8 oder 9, wobei die beiden Teile (71, 72) entweder durch ein Filmscharnier (73) verbunden oder getrennt sind.

11. Baugruppe (100), umfassend ein Gehäuse (40) eines elektrischen Geräts (138) und die Kabelschutzabdeckung (20) nach einem der Ansprüche 1 bis 10,
wobei das Gehäuse (40) eine Verbinderschnittstelle (48) umfasst, die mit dem elektrischen Verbinder (50) verbunden werden kann, und
wobei in einem zusammengebauten Zustand (101) die Verbinderschnittstelle (48) und der elektrische Verbinder (50) zumindest teilweise durch die Kabelschutzabdeckung (20) abgedeckt sind, wobei der elektrische Verbinder (50) in der Verbinderschnittstelle (48) in der Auszugsrichtung (C) durch die Kabelschutzabdeckung (20) blockiert ist.

12. Baugruppe (100) nach Anspruch 11, wobei der elektrische Verbinder (50) eine Fixierung der Kabelschutzabdeckung (20) am Gehäuse (40) blockiert, wenn der elektrische Verbinder (50) nicht vollständig an der Verbinderschnittstelle (48) montiert ist.

13. Baugruppe (100) nach Anspruch 11 oder 12, wobei ein Schließen der beiden Teile (71, 72) der Kabelschutzabdeckung (20) um mindestens ein Kabel (30) oder den elektrischen Verbinder (50) durch den nicht vollständig an der Verbinderschnittstelle (48) montierten elektrischen Verbinder (50) blockiert wird.

14. Baugruppe (100) nach einem der Ansprüche 11 bis 13, wobei der Gehäusebefestigungsabschnitt (24) mindestens einen Blockiervorsprung (141) umfasst, der an den elektrischen Verbinder (50) anstößt, wobei der elektrische Verbinder (50) zwischen dem Gehäuse (40) und dem mindestens einen Blockiervorsprung (141) angeordnet ist.

15. Baugruppe (100) nach einem der Ansprüche 11 bis 14, wobei die Kabelschutzabdeckung (20) als Verbinderpositionssicherung für den elektrischen Verbinder (50) im Gehäuse (40) ausgebildet ist.

## Revendications

1. Couvercle de protection de câble (20) configuré pour être fixé à un boîtier (40) d'un appareil électrique (138),
le couvercle de protection de câble (20) comprenant une section de fixation de boîtier (24) adaptée pour fixer le couvercle de protection de câble (20) au boîtier (40),
la section de fixation de boîtier (24) étant en outre adaptée pour recevoir un connecteur électrique (50) fixé au boîtier (40) et incluant un verrou de connecteur (27), le verrou de connecteur (27) ayant au moins un élément de verrouillage (139) adapté pour retenir le connecteur électrique (50) dans sa position fixée au boîtier (40) au moins dans une direction d'extraction (C) du connecteur électrique (50),
**le couvercle de protection de câble (20) caractérisé en ce que**
l'au moins un élément de verrouillage (139) du verrou de connecteur (27) fait saillie vers l'intérieur perpendiculairement à la direction d'extraction (C), établissant ainsi un ajustement positif contre la direction d'extraction (C) entre le couvercle de protection de câble (20) et le connecteur électrique.

2. Couvercle de protection de câble (20) selon la revendication 1, comprenant en outre une section de décharge de traction (60) adaptée pour recevoir au moins un câble (30) du connecteur électrique (50), la section de réception de câble comprenant au moins un élément de décharge de traction de câble (140).

3. Couvercle de protection de câble (20) selon la revendication 1 ou 2, dans lequel le couvercle de protection de câble (20) comprend en outre une section de fixation de tube (21) adaptée pour s'engager dans un tube de câble (10) entourant l'au moins un câble (30).

4. Couvercle de protection de câble (20) selon la revendication **3,** dans lequel la section de fixation de tube (21) comprend un élément de verrouillage de tube (22) adapté pour s'engager dans un tube ondulé (10) entourant l'au moins un câble (30).

5. Couvercle de protection de câble (20) selon la revendication 3 ou 4, dans lequel le couvercle de protection de câble (20) comprend un trou traversant d'inspection (77) dirigé vers un intérieur de la section de fixation de tube (21).

6. Couvercle de protection de câble (20) selon l'une quelconque des revendications 1 à 5, dans lequel la section de fixation de boîtier (24) comprend un agencement d'ajustement positif (26) qui fait saillie vers l'intérieur et qui est adapté pour établir un ajustement positif avec le boîtier (40) dans un état assemblé (101) au moins dans la direction d'extraction (C).

7. Couvercle de protection de câble (20) selon la revendication 6, dans lequel l'agencement d'ajustement positif (26) et l'au moins un élément de verrouillage (139) du verrou de connecteur (27) font saillie à partir d'une paroi latérale commune (25) du couvercle de protection de câble (20).

8. Couvercle de protection de câble (20) selon l'une quelconque des revendications 1 à 7, dans lequel le couvercle de protection de câble (20) comprend deux parties (71, 72) qui sont adaptées pour être assemblées dans une direction perpendiculaire à la direction d'extraction (C).

9. Couvercle de protection de câble (20) selon la revendication 8, dans lequel un plan de séparation (75) entre les deux parties (71, 72) est parallèle à la direction d'extraction (C).

10. Couvercle de protection de câble (20) selon la revendication 8 ou 9, dans lequel les deux parties (71, 72) sont l'une de connectées par une charnière de film (73) et l'autre de séparées.

11. Ensemble (100), comprenant un boîtier (40) d'un appareil électrique (138), et le couvercle de protection de câble (20) selon l'une quelconque des revendications 1 à 10,
dans lequel le boîtier (40) comprend une interface de connecteur (48) adaptée pour être connectée au connecteur électrique (50), et
dans lequel, dans un état assemblé (101), l'interface de connecteur (48) et le connecteur électrique (50) sont au moins partiellement recouverts par le couvercle de protection de câble (20), le connecteur électrique (50) dans l'interface de connecteur (48) étant bloqué dans la direction d'extraction (C) par le couvercle de protection de câble (20).

12. Ensemble (100) selon la revendication 11, dans lequel le connecteur électrique (50) bloque une fixation du couvercle de protection de câble (20) sur le boîtier (40) si le connecteur électrique (50) n'est pas entièrement monté sur l'interface de connecteur (48).

13. Ensemble (100) selon la revendication 11 ou 12, dans lequel une fermeture de deux parties (71, 72) du couvercle de protection de câble (20) autour d'au moins l'un d'un câble (30) et du connecteur électrique (50) est bloquée par le connecteur électrique (50) qui n'est pas entièrement monté sur l'interface de connecteur (48).

14. Ensemble (100) selon l'une quelconque des revendications 11 à 13, dans lequel la section de fixation de boîtier (24) comprend au moins une protubérance de blocage (141) en butée contre le connecteur électrique (50), le connecteur électrique (50) étant disposé entre le boîtier (40) et l'au moins une protubérance de blocage (141).

15. Ensemble (100) selon l'une quelconque des revendications 11 à 14, dans lequel le couvercle de protection de câble (20) est configuré comme une assurance de position du connecteur pour le connecteur électrique (50) dans le boîtier (40).
